# EUROPÄISCHE PATENTSCHRIFT

(11) **EP 2 476 185 B1**
(45) Veröffentlichungstag und Bekanntmachung des Hinweises auf die Patenterteilung: **11.03.2020**
(21) Anmeldenummer: 10747425.6
(22) Anmeldetag: 20.08.2010
(51) Int. Cl.: H02K 3/28, H02K 3/52

(54) **ANORDNUNG ZUR BEWIRKUNG EINER STERNPUNKTVERBINDUNG, INSBESONDERE DER STATORWICKLUNGEN EINES ELEKTROMOTORS, UND ELEKTROMOTOR**
ARRANGEMENT FOR PRODUCING A STAR POINT CONNECTION, PARTICULARLY OF STATOR WINDINGS OF AN ELECTROMOTOR, AND ELECTROMOTOR
DISPOSITIF POUR RÉALISER UNE CONNEXION EN ÉTOILE, EN PARTICULIER DES ENROULEMENTS DE STATOR D'UN MOTEUR ÉLECTRIQUE, ET MOTEUR ÉLECTRIQUE CORRESPONDANT

(30) Priorität: 08.09.2009 DE 102009040520; 02.08.2010 DE 102010033045
(43) Veröffentlichungstag der Anmeldung: 18.07.2012
(73) Patentinhaber: SEW-EURODRIVE GmbH & Co. KG, 76646 Bruchsal (DE)
(72) Erfinder: ZELLER, Peter, 68723 Oftersheim (DE)
(86) Internationale Anmeldenummer: PCT/EP2010/005130
(87) Internationale Veröffentlichungsnummer: WO 2011/029523

(56) Entgegenhaltungen:
- EP-A1- 0 863 601
- EP-A2- 1 328 058
- EP-A2- 1 876 685
- DE-A1- 10 037 657

## Beschreibung

**Die Erfindung betrifft eine Anordnung mit Sternpunktverschaltung und/oder Sternpunktverbindung der Statorwicklungen eines Elektromotors, insbesondere Drehstrommotors, einen Elektromotor und ein Verfahren zum Herstellen einer Sternpunktverschaltung bewirkt.**

Bei als Drehstrommotoren ausgeführten Elektromotoren ist bekannt, die den einzelnen Phasen zugeordneten Statorwicklungen mit ihren Endbereichen in Sternpunktschaltung zu verschalten.

**Aus der** EP 1 876 685 A2 **ist eine Motor-Stator-Anordnung Sternpunktverschaltung der Statorwicklungen des Elektromotors bekannt.**

**Aus der** EP 1 328 058 A2 **ist eine Elektromaschine bekannt mit einer zugehörigen Statorkontaktierung.**

**Aus der** EP 0 863 601 A1 **ist eine Verbindungskonfiguration für einen Stator bekannt.**

**Aus der** DE 100 37 657 A1 **ist eine Anschlussvorrichtung zum Anschließen eines Gleichrichters an einen Drehstromgenerator bekannt.**

Der Erfindung liegt daher die Aufgabe zugrunde, eine Anordnung mit Sternpunktverschaltung weiterzubilden.

**Erfindungsgemäß wird die Aufgabe bei einem Verfahren zum Herstellen einer Sternpunktverschaltung nach den in Anspruch 14, bei der Anordnung mit Sternpunktverschaltung und/oder Sternpunktverbindung der Statorwicklungen eines Elektromotors, insbesondere Drehstrommotors, nach den in Anspruch 1 und bei dem Elektromotor nach den in Anspruch 11 angegebenen Merkmalen gelöst.**

Wichtige Merkmale der Erfindung bei der Anordnung zur Herstellung einer Sternpunktverbindung bei einem Elektromotor, insbesondere Drehstrommotor sind, dass
auf Statorwicklungsdraht-Endbereiche erste Crimp-Hülsen aufgeschoben und verbunden sind,
wobei die ersten Crimp-Hülsen mit zweiten Crimp-Hülsen verbunden sind mittels einer jeweiligen Schweißverbindung,
wobei die zweiten Crimp-Hülsen auf einer elektrischen Leitung aufgeschoben und verbunden sind.

Von Vorteil ist dabei, dass im Abschlussbereich nur ein geringer Platzbedarf ist, da die Verbindungen innerhalb des Statorwicklungsraumbereiches ausgeführt sind. Dort ist somit eine einfache und zuverlässige Realisierung ermöglicht. Denn jede Verbindungsstelle ist einzeln ausführbar und kontrollierbar.

Bei einer vorteilhaften Ausgestaltung ist die Schweißverbindung eine Kontaktschweißverbindung, insbesondere elektrische Kontaktschweißverbindung und/oder Druckschweißverbindung. Von Vorteil ist dabei, dass durch kurzfristiges Aufeinanderpressen der Crimphülsen, also Erzeugung eines hohen Anpressdrucks bei gleichzeitiger Bestromung der Verbindungsstelle zwischen den Crimp-Hülsen mit hoher Stromstärke eine schnell und einfach erzeugte Schweißverbindungsstelle mit hoher Zuverlässigkeit erzeugbar ist.

Bei einer vorteilhaften Ausgestaltung sind diese zweiten Crimp-Hülsen jeweils voneinander beabstandet. Von Vorteil ist dabei, dass die Verbindungsstellen vereinzelt sind und nicht an einer einzigen gemeinsamen Stelle ausgeführt sind. Somit sind sie gut zugänglich und leicht kontrollierbar.

Bei einer vorteilhaften Ausgestaltung ist die elektrische Leitung eine Litze. Von Vorteil ist dabei, dass auch bei Ausfall eines der Litzendrähte der Litze der Strom durch die anderen Litzendrähte führbar ist. Außerdem sind hohe Stromstärken realisierbar, da im Vergleich zum Volumen der Litze eine große Oberfläche für den Strom zur Verfügung gestellt wird.

Bei einer vorteilhaften Ausgestaltung ist die Litze mit einem ihrer Enden in den Anschlussbereich herausgeführt, in welchen auch die Enden der Statorwicklungsdrähte herausgeführt sind. Von Vorteil ist dabei, dass der Sternpunkt im Anschlussbereich herausgeführt ist und dort weiter verbunden werden kann, beispielsweise mit einem Nullleiter oder alternativ wird das Potential am Sternpunkt überwacht.

Bei einer vorteilhaften Ausgestaltung sind die Crimp-Hülsen aufgecrimpt. Von Vorteil ist dabei, dass ein festes und sicheres aber auch einfaches elektrisches Anschlussmittel mit dem Wicklungsdraht beziehungsweise mit der Litze verbindbar ist.

Bei einer vorteilhaften Ausgestaltung ist das andere Ende der Litze in den Statorwicklungsraumbereich weitergeführt. Von Vorteil ist dabei, dass weitere Sternpunkte verbindbar sind.

Bei einer vorteilhaften Ausgestaltung ist jeder Phase eine Statorwicklung zugeordnet, wobei jeder Statorwicklungsdraht aus mehreren, insbesondere parallel verlaufenden, Einzeldrähten zusammengesetzt ist. Von Vorteil ist dabei, dass hohe Stromstärken zulässig sind.

Bei einer vorteilhaften Ausgestaltung ist im jeweiligen Statorwicklungsdraht-Endbereich auf jeden Einzeldraht eine erste Crimp-Hülse aufgeschoben und verbunden. Von Vorteil ist dabei, dass jeder Draht einzeln verbindbar ist und somit eine hohe Qualität erreichbar ist.

Bei einer vorteilhaften Ausgestaltung sind der Wicklungsdraht aus einem Kupfer-haltigen Material und die Crimp-Hülsen aus einem Aluminium-haltigen Material oder aus einem Stahlblechteil gefertigt. Von Vorteil ist dabei, dass ein geringer Übergangswiderstandswert erreichbar ist.

Wichtige Merkmale bei dem Elektromotor sind, dass er mit einer vorbeschriebenen Anordnung ausgeführt ist. Von Vorteil ist dabei, dass der Sternpunkt im Statorwicklungsinnenraum verschaltbar ist und somit kein Herausführen der zu verschaltenden Enden der Statorwicklungsdrähte auszuführen ist.

Bei einer vorteilhaften Ausgestaltung sind die Statorwicklungen in Sternpunktschaltung miteinander verschaltet, insbesondere innerhalb des Statorwicklungsraumbereichs. Von Vorteil ist dabei, dass der Anschlussbereich nur einen geringen Raumbereich erfordert.

Weitere Vorteile ergeben sich aus den Unteransprüchen.

Die Erfindung wird nun anhand von Abbildungen näher erläutert:

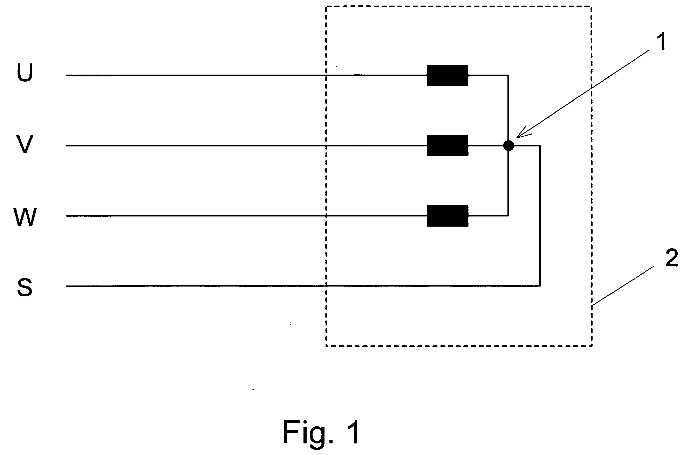

**In der** **Figur 1** **sind Statorwicklungen (u, v, w) eines Elektromotors gezeigt.**

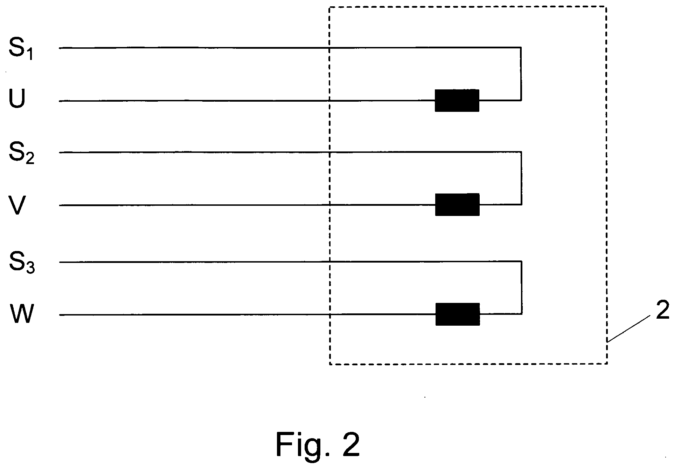

**In der** **Figur 2** **ist als Alternative zur** **Figur 1** **das Herausführen der Enden (s1, s2, s3) aus dem Statorwicklungsraumbereich 2 gezeigt.**

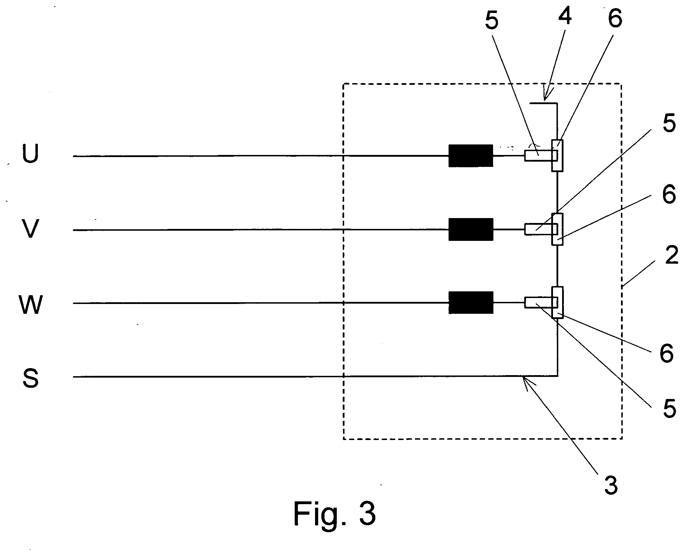

**In der** **Figur 3** **ist ein erfindungsgemäßes Ausführungsbeispiel gezeigt, bei welchem nun auf das sternpunktseitige Ende eines jeweiligen Wicklungsdrahtes der Statorwicklung eine Crimp-Hülse 5 aufgeschoben und gecrimpt, also gequetscht verformt zur Herstellung einer kraftschlüssigen Verbindung mit dem Wicklungsdraht, ist.**

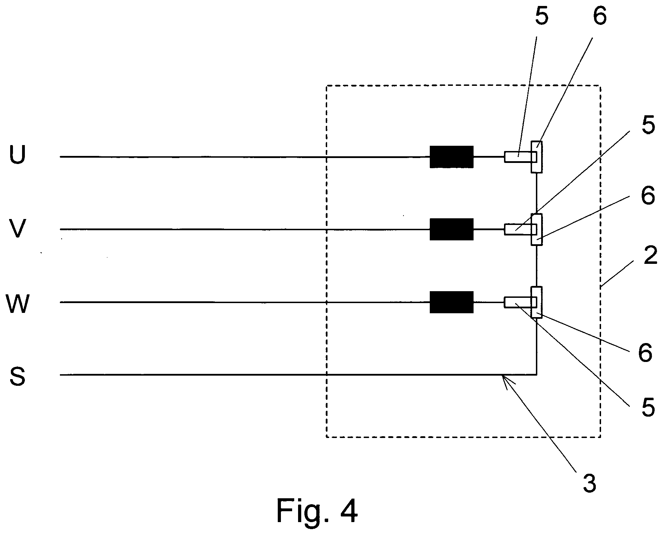

**In der** **Figur 4** **ist ein erfindungsgemäßes Ausführungsbeispiel gezeigt, bei welchem im Unterschied zur** **Figur 3** **das andere Ende 4 abgeschnitten ist, so dass die Litze an einer Crimp-Hülse 6 endet.**

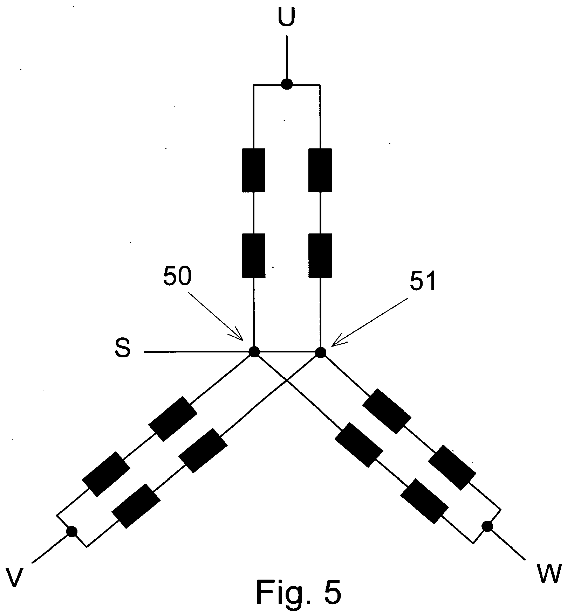

**In** **Figur 5** **ist die Sternpunktverschaltung eines komplexer aufgebauten Motors gezeigt.**

In der Figur 1 sind Statorwicklungen (u, v, w) eines Elektromotors gezeigt. Dabei sind die Statorwicklungen mit Wicklungsdraht ausgeführt. Das jeweilig erste Ende der Wicklungsdrähte wird aus dem Statorwicklungsraumbereich herausgeführt zu einer Anschlussvorrichtung, wie Klemmbrett oder dergleichen, zur Bewirkung einer elektrischen Verbindung mit Versorgungsleitungen.

Die jeweiligen anderen Enden sind an einer zentralen Verbindungsstelle 1 zusammengeschaltet, also elektrische verbunden, so dass ein Sternpunkt gebildet ist.

Da an dieser zentralen Verbindungsstelle 1 alle Enden zusammengeschaltet sind, ist diese sehr groß auszuführen und somit aufwendig. Außerdem ist die Qualität bei der Herstellung dieser Verbindung nur schwer kontrollierbar und einhaltbar.

In der Figur 2 ist als Alternative zur Figur 1 das Herausführen der Enden (s1, s2, s3) aus dem Statorwicklungsraumbereich 2 gezeigt. Auf diese Weise ist eine Verschaltung an der Anschlussvorrichtung ausführbar, wodurch die Qualität einfach und sehr gut einhaltbar ist. Allerdings ist diese Ausführung aufwendig, erfordert große Ausnehmungen im Statorgehäuse, durch welche die Enden hindurchzuführen sind und im Bereich der Anschlussvorrichtung sind zusätzliche Verbindungen notwendig zur Herstellung der Sternpunktverschaltung.

In der Figur 3 ist ein erfindungsgemäßes Ausführungsbeispiel gezeigt, bei welchem nun auf das sternpunktseitige Ende eines jeweiligen Wicklungsdrahtes der Statorwicklung eine Crimp-Hülse 5 aufgeschoben und gecrimpt, also gequetscht verformt zur Herstellung einer kraftschlüssigen Verbindung mit dem Wicklungsdraht, ist.

Zur Bildung der Sternpunktverschaltung wird eine Litze 3 verwendet, auf die jeweilige Crimp-Hülsen 6 aufgeschoben sind, wobei diese Crimp-Hülsen 6 voneinander beabstandet sind. Vorzugsweise werden sie ebenfalls mit der Litze gecrimpt verbunden, also auf die Litze 3 gequetscht verformt zur Herstellung einer kraftschlüssigen Verbindung mit der Litze.

Die Crimp-Hülsen 5 werden mit den Crimp-Hülsen 6 schweißverbunden, insbesondere im Crimp-Schweißverfahren und/oder im Kontakt-Schweißverfahren. Somit ist nur eine Schweißverbindung zwischen zwei jeweiligen Crimp-Hülsen auszuführen. Daher ist die Verbindung einfach herzustellen und leicht und gut kontrollierbar, also auch die Qualität einfach und gut überprüfbar. Die Litze 3 ist mit ihrem einen Ende s ebenfalls in den Anschlussbereich aus dem Statorwicklungsraumbereich herausgeführt. Somit ist der Sternpunkt zugänglich und ist mit einem Nullpunktpotential verbindbar. Das andere Ende 4 der Litze ist in den Statorwicklungsraumbereich weitergeführt und ist für weitere Sternpunktverbindungsstellen verwendbar.

In der Figur 4 ist ein erfindungsgemäßes Ausführungsbeispiel gezeigt, bei welchem im Unterschied zur Figur 3 das andere Ende 4 abgeschnitten ist, so dass die Litze an einer Crimp-Hülse 6 endet. Es wird also nur der erste Endbereich s der Litze 3 herausgeführt und ist im Anschlussbereich zugänglich.

Der Elektromotor ist vorzugsweise ein Drehstrommotor, wobei jeder der drei Phasen eine Statorwicklung zugeordnet ist. Für das Durchleiten von hohen Statorströmen hat es sich als vorteilhaft erwiesen, den Wicklungsdraht mehradrig auszuführen, also den jeweiligen Wicklungsdraht aus mehreren Einzeldrähten zusammenzusetzen. In einer ersten Variante werden die Einzeldrähte mit einer gemeinsamen Crimp-Hülse versehen und in einer zweiten Variante jeder Einzeldraht mit einer jeweiligen Crimp-Hülse.

In Figur 5 ist die Sternpunktverschaltung eines komplexer aufgebauten Motors gezeigt. Hierbei ist jeder Phase (u, v, w) eine jeweilige Parallelschaltung von Reihenschaltungen ausgeführt. Dabei werden die Enden der ersten Reihenschaltungen jeder Phase auf den ersten Sternpunkt 50 geführt und die Enden der zweiten Reihenschaltungen jeder Phase auf den zweiten Sternpunkt 51. Der Sternpunkt 50 ist entsprechend Figur 3 ausgeführt wobei die Weiterführung 4 der Litze 3 zum Sternpunkt 51 geführt ist, der wiederum analog Figur 3 oder Figur 4 ausgeführt ist, also erste Crimp-Hülsen mit zweiten verbunden sind, die auf dem Litzenfortsatz 4 aufgeschoben und verbunden sind.

Unter Sternpunktverbindung wird hierbei stets die Sternpunktverschaltung verstanden.

### Bezugszeichenliste

- 1: zentrale Verbindung
- 2: Statorwicklungsraumbereich
- 3: Litze
- 4: Endbereich der Litze 3
- 5: Crimp-Hülse für Wicklungsdraht der Statorwicklung
- 6: Crimp-Hülse, aufgeschoben auf Litze
- 50: erster Sternpunkt
- 51: zweiter Sternpunkt

- u: Statorwicklung
- v: Statorwicklung
- w: Statorwicklung
- s: aus dem Statorwicklungsraumbereich herausgeführter Endbereich der Litze
- s1: Sternpunktzuführung
- s2: Sternpunktzuführung
- s3: Sternpunktzuführung

## Patentansprüche

1. Anordnung mit Sternpunktverschaltung und/oder Sternpunktverbindung der Statorwicklungen **ein**es Elektromotors,
wobei auf **das sternpunktseitige Ende eines jeweiligen Wicklungsdrahtes der jeweiligen Statorwicklung jeweils eine** erste Crimp-Hülse (5) aufgeschoben und verbunden **ist**,
**wobei** die ersten Crimp-Hülse (5) mit zweiten Crimp-Hülsen (6) verbunden sind mittels einer jeweiligen Schweißverbindung,
wobei die zweiten Crimp-Hülsen (6) **seriell** auf einer elektrischen Leitung **zur Bildung der Sternpunktverbindung** aufgeschoben und **mit der elektrischen Leitung** verbunden sind.

2. Anordnung **nach Anspruch 1,**
**dadurch gekennzeichnet, dass**
die Schweißverbindung eine Kontaktschweißverbindung ist, insbesondere elektrische Kontaktschweißverbindung und/oder Druckschweißverbindung.

3. Anordnung nach mindestens einem der vorangegangenen Ansprüche,
**dadurch gekennzeichnet, dass**
diese zweiten Crimp-Hülsen (6) voneinander beabstandet sind.

4. Anordnung nach mindestens einem der vorangegangenen Ansprüche,
**dadurch gekennzeichnet, dass**
die elektrische Leitung eine Litze (3) ist.

5. Anordnung **nach Anspruch 4,**
**dadurch gekennzeichnet, dass**
die Litze (3) mit einem ihrer Enden in den Anschlussbereich herausgeführt ist, in welchen auch die Enden der Statorwicklungsdrähte herausgeführt sind.

6. Anordnung nach mindestens einem der vorangegangenen Ansprüche,
**dadurch gekennzeichnet, dass**
die Crimp-Hülse (5) aufgecrimpt sind.

7. Anordnung **nach Anspruch 5,**
**dadurch gekennzeichnet, dass**
das andere Ende der Litze (3) in den Statorwicklungsraumbereich (2) weitergeführt ist zur Bildung eines weiteren Sternpunktes (51).

8. Anordnung nach mindestens einem der vorangegangenen Ansprüche,
**dadurch gekennzeichnet, dass**
jeder Phase (u, v, w) eine Statorwicklung zugeordnet ist oder eine Parallelschaltung von Reihenschaltungen von Einzelwicklungen zugeordnet ist.

9. Anordnung nach mindestens einem der vorangegangenen Ansprüche,
**dadurch gekennzeichnet, dass**
jeder Statorwicklungsdraht aus mehreren, insbesondere parallel verlaufenden, Einzeldrähten zusammengesetzt ist, insbesondere wobei jeder Einzeldraht-Endbereich mit einer ersten Crimp-Hülse (5) verbunden ist, die mit einer zweiten Crimp-Hülse (6) elektrisch verbunden ist.

10. Anordnung **nach Anspruch 9,**
**dadurch gekennzeichnet, dass**
im jeweiligen Statorwicklungsdraht-Endbereich auf jeden Einzeldraht eine erste Crimp-Hülse (5) aufgeschoben und verbunden ist.

11. Elektromotor mit einer Anordnung nach mindestens einem der vorangegangenen Ansprüche.

12. Elektromotor nach Anspruch 11,
**dadurch gekennzeichnet, dass**
der Wicklungsdraht aus einem Kupfer-haltigen Material und die Crimp-Hülse (5, 6) aus einem Aluminium-haltigen Material oder aus einem Stahlblechteil gefertigt sind.

13. Elektromotor **nach Anspruch 11 oder 12,**
**dadurch gekennzeichnet, dass**
die Statorwicklung aus einer einer jeweiligen Phase zugeordneten Parallelschaltung von zwei oder mehr Reihenschaltungen von Einzelwicklungen besteht,
wobei eine erste der Reihenschaltungen jeder Parallelschaltung mit einem ersten Sternpunkt (50) verbunden ist und eine zweite der Reihenschaltungen jeder Parallelschaltung mit einem zweiten Sternpunkt (51) verbunden ist.

14. Verfahren zum Herstellen einer Sternpunktverschaltung, insbesondere Verfahren zum Herstellen eines Elektromotors, insbesondere Drehstrommotors, mit einer Sternpunktverschaltung der Statorwicklungen, insbesondere mit einer Sternpunktverbindung der Statorwicklungen,
wobei auf **das sternpunktseitige Ende eines jeweiligen Wicklungsdrahtes der jeweiligen Statorwicklung jeweils eine** erste Crimp-Hülse (5) aufgeschoben und verbunden **wird,**
**dadurch gekennzeichnet, dass**
die ersten Crimp-Hülsen (5) mit zweiten Crimp-Hülsen (6) verbunden werden mittels einer jeweiligen Schweißverbindung,
wobei die zweiten Crimp-Hülsen (6) **seriell** auf einer elektrischen Leitung aufgeschoben und **mit dieser** verbunden werden,
insbesondere wobei mittels des Schweißverbindens, insbesondere Punktschweißverbindens, die mechanische und elektrische Verbindung zwischen den Crimp-Hülsen (5, 6) und der elektrischen Leitung bewirkt wird.

## Claims

1. Arrangement comprising star point wiring and/or a star point connection of the stator windings of an electric motor,
wherein a first crimp sleeve (5) is pushed onto the star-point end of each winding wire of each stator winding and connected,
wherein the first crimp sleeves (5) are connected to second crimp sleeves (6) by means of respective welded connections,
wherein the second crimp sleeves (6) are pushed on an electrical line in series to form the star point connection and are connected to the electrical line.

2. Arrangement according to claim 1,
**characterised in that**
the welded connection is a contact-welded connection, in particular an electrical contact-welded connection and/or pressure-welded connection.

3. Arrangement according to at least one of the preceding claims,
**characterised in that**
said second crimp sleeves (6) are spaced apart from one another.

4. Arrangement according to at least one of the preceding claims,
**characterised in that**
the electrical line is a litz cable (3).

5. Arrangement according to claim 4,
**characterised in that**
by one of its ends, the litz cable (3) is led out into the connection region into which the ends of the stator winding wires are also led.

6. Arrangement according to at least one of the preceding claims,
**characterised in that**
the crimp sleeves (5) are crimped on.

7. Arrangement according to claim 5,
**characterised in that**
the other end of the litz cable (3) is led further into the stator winding spatial region (2) to form an additional star point (51).

8. Arrangement according to at least one of the preceding claims,
**characterised in that**
each phase (u, v, w) is associated with one stator winding or with a parallel circuit of series circuits of individual windings.

9. Arrangement according to at least one of the preceding claims,
**characterised in that**
each stator winding wire is composed of a plurality of individual wires, which in particular extend in parallel, each individual-wire end region in particular being connected to a first crimp sleeve (5) which is electrically connected to a second crimp sleeve (6).

10. Arrangement according to claim 9,
**characterised in that**
in each stator winding wire end region, a first crimp sleeve (5) is pushed onto each individual wire and connected.

11. Electric motor comprising an arrangement according to at least one of the preceding claims.

12. Electric motor according to claim 11,
**characterised in that**
the winding wire is made of a copper-containing material and the crimp sleeve (5, 6) is made of an aluminium-containing material or a sheet steel part.

13. Electric motor according to either claim 11 or claim 12,
**characterised in that**
the stator winding consists of a parallel circuit of two or more series circuits of individual windings, said parallel circuit being associated with one particular phase,
a first series circuit of each parallel circuit being connected to a first star point (50) and a second series circuit of each parallel circuit being connected to a second star point (51).

14. Method for producing star point wiring, in particular a method for producing an electric motor, in particular a three-phase motor, comprising star point wiring of the stator windings, in particular a star point connection of the stator windings,
a first crimp sleeve (5) being pushed onto the star-point end of each winding wire of each stator winding and connected,
**characterised in that**
the first crimp sleeves (5) are connected to second crimp sleeves (6) by means of respective welded connections,
the second crimp sleeves (6) being pushed on an electrical line in series and connected thereto,
the mechanical and electrical connection between the crimp sleeves (5, 6) and the electrical line in particular being brought about by means of the welding, in particular point welding.

## Revendications

1. Agencement avec câblage en étoile et/ou connexion en étoile des enroulements statoriques d'un moteur électrique,
dans lequel un premier manchon de sertissage (5) est enfilé sur l'extrémité côté point étoile d'un fil d'enroulement respectif de l'enroulement statorique respectif et relié à celle-ci,
dans lequel les premiers manchons de sertissage (5) sont reliés à des deuxièmes manchons de sertissage (6) au moyen d'une soudure respective,
dans lequel les deuxièmes manchons de sertissage (6) sont enfilés en série sur une ligne électrique pour former la connexion en étoile et reliés à la ligne électrique.

2. Agencement selon la revendication 1,
**caractérisé en ce que**
la soudure est une soudure par contact, en particulier une soudure par contact électrique et/ou une soudure par pression.

3. Agencement selon au moins l'une des revendications précédentes,
**caractérisé en ce que**
ces deuxièmes manchons de sertissage (6) sont espacés les uns des autres.

4. Agencement selon au moins l'une des revendications précédentes,
**caractérisé en ce que**
la ligne électrique est un fil toronné (3).

5. Agencement selon la revendication 4,
**caractérisé en ce que**
le fil toronné (3) est conduit par l'une de ses extrémités dans la zone de raccordement dans laquelle les extrémités des fils d'enroulement statorique sont également conduites.

6. Agencement selon au moins l'une des revendications précédentes,
**caractérisé en ce que**
les manchons de sertissage (5) sont sertis.

7. Agencement selon la revendication 5,
**caractérisé en ce que**
l'autre extrémité du fil toronné (3) est prolongée dans la zone spatiale d'enroulement statorique (2) pour former un autre point étoile (51).

8. Agencement selon au moins l'une des revendications précédentes,
**caractérisé en ce**
**qu'**un enroulement statorique ou un couplage en parallèle de couplages en série d'enroulements individuels est associé à chaque phase (u, v, w).

9. Agencement selon au moins l'une des revendications précédentes,
**caractérisé en ce que**
chaque fil d'enroulement statorique est composé de plusieurs fils individuels, en particulier s'étendant parallèlement, en particulier dans lequel chaque zone d'extrémité de fil individuel est reliée à un premier manchon de sertissage (5) qui est relié électriquement à un deuxième manchon de sertissage (6).

10. Agencement selon la revendication 9,
**caractérisé en ce**
**qu'**un premier manchon de sertissage (5) est enfilé sur chaque fil individuel dans la zone d'extrémité de fil d'enroulement statorique respective et relié à celui-ci.

11. Moteur électrique doté d'un agencement selon au moins l'une des revendications précédentes.

12. Moteur électrique selon la revendication 11,
**caractérisé en ce que**
le fil d'enroulement est réalisé à partir d'un matériau contenant du cuivre et le manchon de sertissage (5, 6) à partir d'un matériau contenant de l'aluminium ou à partir d'une pièce en tôle d'acier.

13. Moteur électrique selon la revendication 11 ou 12,
**caractérisé en ce que**
l'enroulement statorique est constitué d'un couplage en parallèle de deux ou plusieurs couplages en série d'enroulements individuels qui est associé à une phase respective, dans lequel un premier des couplages en série de chaque couplage en parallèle est relié à un premier point étoile (50) et un deuxième des couplages en série de chaque couplage en parallèle est relié à un deuxième point étoile (51).

14. Procédé de fabrication d'un câblage en étoile, en particulier procédé de fabrication d'un moteur électrique, en particulier d'un moteur triphasé, avec un câblage en étoile des enroulements statoriques, en particulier avec une connexion en étoile des enroulements statoriques,
dans lequel un premier manchon de sertissage (5) est enfilé sur l'extrémité côté point étoile d'un fil d'enroulement respectif de l'enroulement statorique respectif et relié à celle-ci,
**caractérisé en ce que**
les premiers manchons de sertissage (5) sont reliés à des deuxièmes manchons de sertissage (6) au moyen d'une soudure respective,
dans lequel les deuxièmes manchons de sertissage (6) sont enfilés en série sur une ligne électrique et reliés à celle-ci,
en particulier dans lequel la liaison mécanique et électrique entre les manchons de sertissage (5, 6) et le conducteur électrique est réalisée au moyen de la soudure, en particulier d'une soudure par points.
